# EUROPEAN PATENT SPECIFICATION

(11) **EP 3 935 822 B1**
(45) Date of publication and mention of the grant of the patent: **14.08.2024**
(21) Application number: 19712519.8
(22) Date of filing: 07.03.2019
(51) Int. Cl.: H04L 69/28, H04M 15/00, H04W 4/24, H04W 4/16, H04M 3/533, H04M 3/436, H04M 3/38, H04L 12/14

(54) **VOICEMAIL CONNECTION CONTROL**
VOICEMAIL-VERBINDUNGSSTEUERUNG
COMMANDE DE CONNEXION À LA MESSAGERIE VOCALE

(43) Date of publication of application: 12.01.2022
(73) Proprietor: Unify Patente GmbH & Co. KG, 81739 München (DE)
(72) Inventor: ALEXIOU-GARDIKIOTI, Athanasia, 19001 Keratea Attica (GR); TSOUTSAIOS, Antonios, 15343 Agia Paraskevi Athens (GR)
(74) Representative: Schaafhausen Patentanwälte PartGmbB
(86) International application number: PCT/EP2019/055785
(87) International publication number: WO 2020/177875

(56) References cited:
- EP-A1- 1 675 421
- EP-A1- 2 179 594
- WO-A1-2012/125046
- US-A1- 2012 302 215
- US-A1- 2017 034 355

## Description

The present invention deals with a method and a system for the control of voicemail connections. In particular, it deals with methods that prohibit unintentional call charges from users due to unintentional connection to the voicemail of a called party.

Voicemail is often an additional service which is chargeable when delivering recorded voice message and is activated whenever an incoming call is not answered, the phone is out of range, deactivated or busy. When a called party does not answer a call, a voicemail allows the caller to leave a voice message. The called party then gets a text message explaining how to listen to the voice message.

A voicemail system also known as voicemail box, voice message or voice bank is a computer-based system that allows users and subscribers to exchange personal voice messages; to select and deliver voice information; and to process transactions relating to individuals, organizations, products and services, thereby often using an ordinary telephone. The term is also used more broadly to denote any system of conveying a stored telecommunications voice messages, including using an answering machine. Most cellphone services of a voicemail as a basic feature; many corporate PBXs include versatile international voice messaging services which are available to most individual and small business landline subscribers.

However, voicemail is by default activated. When the voicemail is activated, the call is automatically forwarded to the voicemail in any of the above cases.

In case a called party wants to deactivate the voicemail, some further actions are needed. The called party can deactivate/activate the voicemail service simply by using the phone self-help system or by calling the service provider's customer service to seek assistance.

From the called party's point of view, this is a way to never miscall. However, from the caller's point of view, this leads in many cases to additional call charges. The charge starts after the phrase "Your call is being delivered". The charge is usually the same as in a regular call.

The matter is that the call is delivered to the voicemail in any of the cases mentioned without that being the intention of the caller. Moreover, in many cases the caller is charged for a predefined amount of money - even if he has not left any voice message to the voicemail box of the called party - without even realizing it. The called party will be informed every time a voice message has been left to the voicemail box, e. g. by receiving an SMS. However, due to the fact that many callers leave voice messages unintentionally the called party will be charged in order to hear a message with no content. Also, in this case the voicemail of a called party is filled with messages which do not possess any content and there will be a need to empty it occasionally.

Various aspects of call process control are inter alia known from US 2012/302215 A1, EP 2 179 594 A1, WO 2012/125046 A1, EP 1 675 421 A1 or US 2017/034355 A1. WO2012/125046 A1 for instance discloses a communication system having a transit switch for forwarding telephony calls, wherein the transit switch includes detection means to detect whether a forwarding call is being diverted or is about to be diverted, and release means to release the call in response to the detection means detecting that the forwarded call is being diverted or is about to be diverted.

US 2012/302215 A1 describes a method for screening calls using a voicemail system in a communication network. A call is initiated between a calling party and a called party. The calling party is connected to a voicemail system, when the called party answers the call or if the called party does not answer when a timer expires. If the called party answers the call a conference call is established so that the call can be screened from the start of the message being left, and also intercepted if desired.

EP 2 179 594 A1 describes controlling a call setup process in a telecommunication device, wherein the telecommunication device receives user command to set up a call, initiates the call setup process, determines that the call is likely to reach a voicemail system, and, in response to the determination that the call is likely to reach the voicemail system, automatically terminates the call setup process.

EP 1 675 421 A1 describes a switching system and method for handling access to a called party's mailbox in a telecommunication network, wherein if a calling party's request for a call connection to the called party is detected and a call connection to the called party cannot be established, it is checked whether a status indicator indicates that a call from this calling party is not to be connected to a mailbox of a called party.

Therefore, the present invention is based on the object to overcome the above-described problems. In particular, the present invention is based on the object to provide a method and system to avoid unnecessary costs due to unintentional connection to the voicemail of a called party, regardless of the called party's configuration.

This object is solved according to the present invention by a method for a call party-controlled avoidance of voicemail redirection having the features according to claim 1, and a system for a call party-controlled avoidance of voicemail redirection having the features according to claim 13.

Preferred embodiments of the invention are specified in the respective dependent claims.

The invention and embodiments thereof will be described below in further detail in connection with the drawings.
FIG. 1a schematically illustrates the timer storage mechanism according to one embodiment of the inventive method;
FIG. 1b shows a flow diagram illustrating the mechanism of storing a timer value;
FIG. 2a schematically illustrates the mechanism of using a stored timer value according to FIG.1a/b to avoid connection to voicemail of the called party's system;
FIG. 2b shows a flow diagram illustrating using the stored timer value of FIG. 1a/b to avoid connection to the voicemail of a called party's system;
FIG. 3a schematically illustrates the mechanism to avoid voicemail connection in any event using an information element; and
FIG. 3b shows the flow diagram of the mechanism described in FIG. 3a.

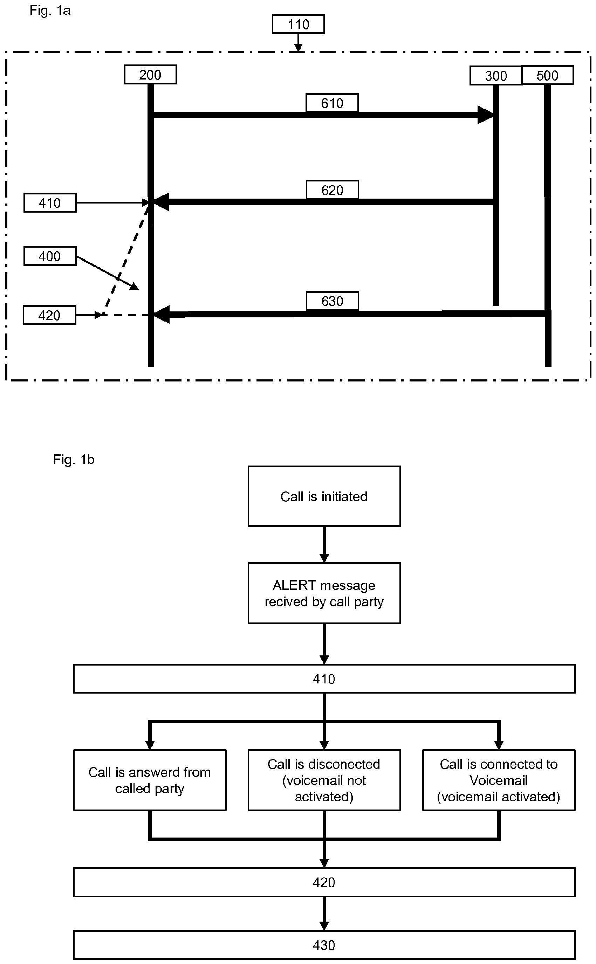

Figures 1a and 1b describe a mechanism for avoiding the connection with voicemail 500 using a timer 400 per destination. The figure 1a schematically illustrates the timer storage mechanism according to one embodiment of the inventive method and figure 1b shows a corresponding flow diagram of this mechanism.

One timer 400 per specific destination (e.g. called party) is needed so that the time that the call needs to be redirected to voicemail 500 can be stored. Considering that every destination may have a different redirecting time to voicemail 500 it is not suitable to use only one timer 400 for all destinations.

If the called party 300 has activated the voicemail 500 service and the call is not answered, then the call will be automatically forwarded to the voicemail 500. The connection with the voicemail 500 is established after a few seconds. Figure 1a shows the process from signaling point of view where a timer 400 is going to be stored. As a result, in this case it cannot be avoided that this first call 110 causes charges because there are no time data stored yet.

At the beginning a first call 110 is initiated. Optionally this step comprises the sending of a SETUP message 610 to the called party's system 300 from the call party's system 200. After the call has reached the called party's system 300 and is ringing e.g. via an ALERT message 620 the timer 400 begins counting from the time the called party's system 300 starts ringing 410 until the connection with Voicemail 420 (e.g. by receiving a CONNECT message 636), in case the called party 300 has not answered the first call 110. The time period between timer starts 410 and timer stops 420 is the timer value t. This timer value t will be stored for future use and will be used from call party's point of view to avoid future connection to called party's voicemail 500.

Optionally two flags are used for this mechanism. A first flag 710 (e.g. called "Store timer" flag) to allow the caller 200 to store this timer 400 and a second flag 720 (e.g. called "Voicemail timer Activated" flag) to activate the mechanism and disconnect the call after the timer stored expires.

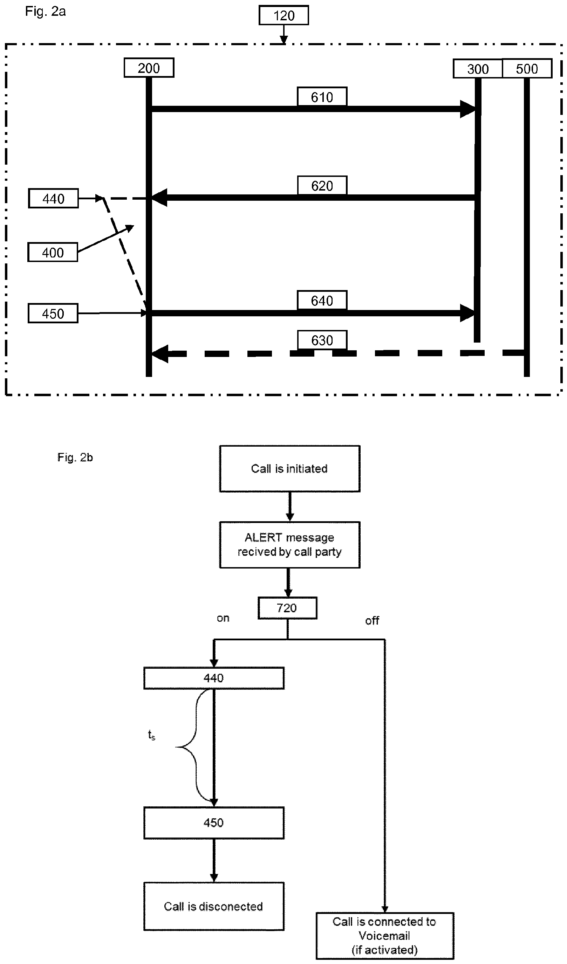

The figures 2a and 2b show how the stored timer value tₛ can be used in order to avoid the connection to the voicemail 500. In this case, a second call 120 will be disconnected before it is connected to the voicemail 500 of the called party's system 300.

The value of timer will be stored automatically if the first flag 710 ("store timer" flag) is activated. Therefore, if another second call 120 is initiated from this user to the same destination (e.g. called party 300), and the second flag 720 ("Voicemail timer Activated" flag) is enabled ("on"), then the timer is activated 440 counting down until it expires 450 as a result the second call 120 is disconnected before it can reach the voicemail 500.

In order to make sure that the redirection to voicemail 500 is avoided, the timer value t will be decreased by timer value t_{d}, which is a configurable parameter and it may be for example 1 second before a stored timer value tₛ is finally stored.

Therefore, using the first flag 710 ("Voicemail timer Activated") per destination, the caller 200 is given the option to activate/deactivate the voicemail 500 redirection. It is important to mention that the mechanism of storing the timer 400 can optionally also be used in case the called party 300 answers the first 110, the second 120 or any further call. So, in this case, the timer 400 can be used from the caller party 200 in order to control the duration the called party 300 alerts and release the call after the stored timer value tₛ expires, if the called party 300 does not answer the call (even if the called party 300 has not activated voicemail 500).

The timer 400 can be updated in every call if the first flag 710 ("store timer") is activated otherwise it will keep the last saved stored timer value tₛ.

If a connection to the voicemail 500 of the called party 300 is established or not, is in this scenario controlled by the caller 200. The caller 200 has the option to use or not the stored timer value tₛ.

The timer values t, t_{d} and tₛ can be stored by contact and be used in future outgoing calls to this contact. Contact means information or any data associated with a specific party or person e.g. called party 300. However, the next time that a specific contact is called and this contact does not answer the call in a certain amount of time (stored timer value tₛ), the call will be disconnected because the second flag 720 "Voicemail Timer Activated" is activated ("on") and as a result no voicemail 500 connection will happen. The caller 200 has the option to see the stored timer value tₛ (e.g. duration in seconds) and choose whether to activate it or not.

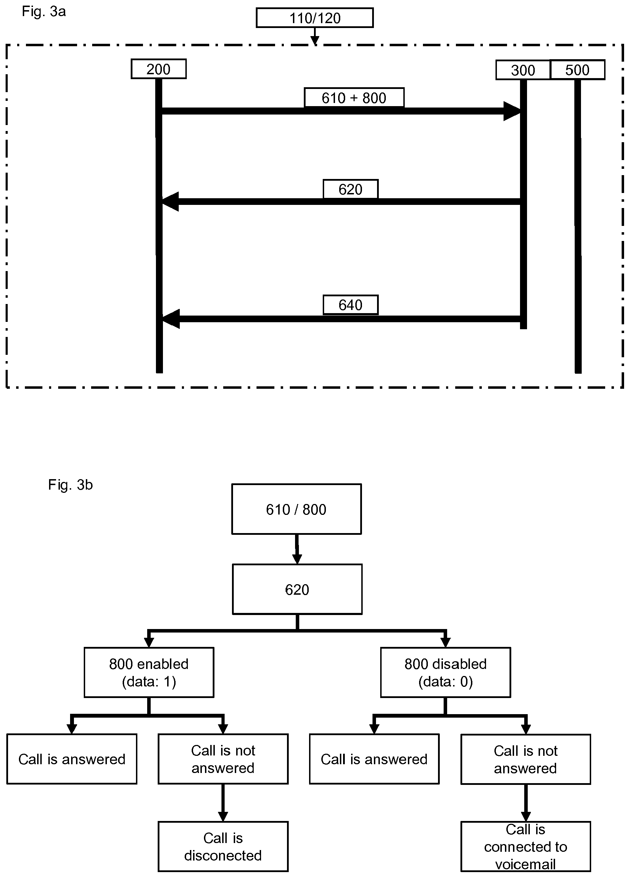

In figures 3a and b a mechanism is described in order to avoid the connection to the voicemail 500. In this case, an Information Element 800 (e.g. called "Voicemail connection") is included in the message 610 which is sent when a new call is initialized. The redirection to voicemail 500 will be prevented and the caller 200 will be disconnected. No matter what the called party 300 state is, the call will never reach the voicemail 500. This can be achieved by setting a third flag 730 before the call is initiated in order to send the SETUP message 610 with the specific Information Element 800. The Information Element 800 comprising the two data sets; data: 0 No voicemail 500 connection; data:1 voicemail 500 connection possible. If the call is not answered by the called party 300 and in the Information Element 800 included in the SETUP message 610 data:0 is enabled the caller 200 will not be allowed to be connected to voicemail 500 of the called party 300 and a disconnect message 640 will be send to the call party 200. This mechanism can apply in case the called party 300 has not answered the call, is busy or deactivated. The call party 200 has the opportunity to activate or deactivate this third flag 730 to either allow connection to voicemail 500 or prevent it in any case.

### Reference Numerals

| | |
|---|---|
| 110 | first call |
| 120 | second call |
| 200 | call party's system |
| 300 | called party's system |
| 400 | timer |
| 410 | timer starts |
| 420 | timer stops |
| 430 | timer stored |
| 440 | timer activation |
| 450 | timer expiration |
| 500 | voicemail |
| 610 | SETUP message |
| 620 | ALERT message |
| 630 | CONNECT message |
| 640 | DISCONNECT message |
| 710 | first flag |
| 720 | second flag |
| 730 | third flag |
| 800 | information element |
| t | timer value |
| tₛ | stored timer value |
| t_{d} | predetermined timer value |

## Claims

1. Method for call party-controlled avoidance of voicemail (500) redirection comprising the following steps:
a) initiating a first call (110) from a call party's system (200) to a called party's system (300);
b) initiating (410) a timer (400) to calculate a timer value (t) once the first call (110) has reached the called party's system (300) and is ringing;
c) terminating (420) the timer (400) once a connection with a voicemail (500) of the called party's system (300) is established;
d) storing (430) the timer value (t) in the call party's system (200) resulting in a stored timer value (tₛ);
e) initiating a second call (120) from the call party's system (200) to the called party's system (300);
f) activating (440) the stored timer value (tₛ) once the second call (120) has reached the called party's system (300) until the stored timer value (tₛ) expires (450); and
g) disconnecting the second call (120) to avoid redirection to voicemail (500) of the called party's system (300).

2. Method as claimed in any of the preceding claims, wherein in step d) the timer value (t) is decreased by a predetermined value (t_{d}) resulting in the stored timer value (tₛ).

3. Method as claimed in any of the preceding claims, wherein in step d) an optional control step for the call party's system (200) to store the timer value (t) in step c) is provided.

4. Method as claimed in any of the preceding claims, wherein in step d) a first flag (710) is used, which is a store timer flag.

5. Method as claimed in any of the preceding claims, wherein before step e) the timer (400) is activated or deactivated.

6. Method as claimed in any of the preceding claims, wherein in step f) a second flag (720) is used, which is a voicemail timer activated flag.

7. Method as claimed in any of the preceding claims, wherein a timer value (t, t_{d}, tₛ) is stored together with called party information.

8. Method as claimed in claim 1, wherein step a) comprises sending a SETUP message (610) from the call party's system (200) to the called party's system (300).

9. Method as claimed in claim 8, wherein an Information Element (800) is included in the SETUP message (610) which can be used to avoid redirection to the voicemail (500).

10. Method as claimed in claim 9, wherein the Information Element (800) comprises two data sets:
1) data: 0 no voicemail (500) connection;
2) data: 1 voicemail (500) connection possible.

11. Method as claimed in any one of claims 8 to 10, wherein a third flag (730) is set before a call is initiated in step a) to enable or disable the Information Element (800).

12. Method as claimed in any of the preceding claims, wherein the call party's system (200) or the called party's system (300) is a PBX phone system and/or the call party's system (200) and/or the called party's system (300) belongs to a PBX phone system.

13. System configured to perform for call party-controlled avoidance of voicemail (500) redirection according to a method of claim 1-12 comprising:
- a storage to store a timer value (t, t_{d}, tₛ);
- means for initiation, disconnection and/or termination of a call (110, 120);
- means for receiving information that the call (110, 120) has reached the called party's system (300) and is ringing;
- means for initiation and/or activation or deactivation of a timer (400) and/or a flag (710, 720, 730);
- means for calculation and/or modulation of the timer (400) and/or the flag (710, 720, 730); and
- means for displaying and/or editing the timer (400) and/or the flag (710, 720, 730).

14. System of claim 13, wherein such a system is part of a PBX phone system.

15. System of claim 13 or claim 14, wherein the call party's system (200) and/or the called party's system (300) is any kind of telephony device or any other communication systems, wherein a call party's device (200) can be connected to a voicemail (500) of a called party's system (300).

## Patentansprüche

1. Verfahren zur rufteilnehmergesteuerten Vermeidung der Umleitung einer Voicemail (500), umfassend folgende Schritte:
a) Einleiten eines ersten Anrufs (110) vom System (200) eines Anrufers zum System (300) eines angerufenen Teilnehmers;
b) Initiieren (410) eines Zeitmessers (400) zum Berechnen eines Zeitmesswertes (t), sobald der erste Anruf (110) das System (300) des angerufenen Teilnehmers erreicht hat und klingelt;
c) Beenden (420) des Zeitmessers (400), sobald eine Verbindung mit einer Voicemail (500) des Systems (300) des angerufenen Teilnehmers hergestellt ist;
d) Speichern (430) des Zeitmesswertes (t) im System (200) des Anrufers, was zu einem gespeicherten Zeitmesswert (ts) führt;
e) Einleiten eines zweiten Anrufs (120) vom System des Anrufers (200) zum System des angerufenen Teilnehmers (300);
f) Aktivieren (440) des gespeicherten Zeitmesswertes (ts), sobald der zweite Anruf (120) das System (300) des angerufenen Teilnehmers erreicht hat, bis der gespeicherte Zeitmesswert (ts) abläuft (450); und
g) Trennen des zweiten Anrufs (120), um eine Umleitung zur Voicemail (500) des Systems (300) des angerufenen Teilnehmers zu vermeiden.

2. Verfahren nach einem der vorhergehenden Ansprüche, wobei in Schritt d) der Zeitmesswert (t) um einen vorbestimmten Wert (td) verringert wird, was zu dem gespeicherten Zeitmesswert (ts) führt.

3. Verfahren nach einem der vorhergehenden Ansprüche, wobei in Schritt d) ein optionaler Steuerschritt für das System (200) des Anrufers zum Speichern des Zeitmesswertes (t) in Schritt c) vorgesehen ist.

4. Verfahren nach einem der vorhergehenden Ansprüche, wobei in Schritt d) eine erste Markierung (710) verwendet wird, welche eine Speicherzeitmesser-Markierung ist.

5. Verfahren nach einem der vorhergehenden Ansprüche, wobei vor Schritt e) der Zeitmesser (400) aktiviert oder deaktiviert wird.

6. Verfahren nach einem der vorhergehenden Ansprüche, wobei in Schritt f) eine zweite Markierung (720) verwendet wird, welche eine Markierung für einen aktivierten Voicemail-Zeitmesser ist.

7. Verfahren nach einem der vorhergehenden Ansprüche, bei dem ein Zeitmesswert (t, td, ts) zusammen mit den Informationen über den angerufenen Teilnehmer gespeichert wird.

8. Verfahren nach Anspruch 1, wobei Schritt a) das Senden einer SETUP-Nachricht (610) vom System (200) des Anrufers zum System (300) des angerufenen Teilnehmers umfasst.

9. Verfahren nach Anspruch 8, wobei ein Informationselement (800) in der SETUP-Nachricht (610) enthalten ist, das dazu verwendet werden kann, die Umleitung zur Voicemail (500) zu vermeiden.

10. Verfahren nach Anspruch 9, wobei das Informationselement (800) zwei Datensätze umfasst:
1) Daten: 0 keine Voicemail (500) -Verbindung;
2) Daten: 1 Voicemail (500) -Verbindung möglich.

11. Verfahren nach einem der Ansprüche 8 bis 10, wobei eine dritte Markierung (730) gesetzt wird, bevor ein Anruf in Schritt a) eingeleitet wird, um das Informationselement (800) zu aktivieren oder zu deaktivieren.

12. Verfahren nach einem der vorhergehenden Ansprüche, wobei die Anlage (200) des Anrufers oder die Anlage (300) des angerufenen Teilnehmers eine PBX-Telefonanlage ist und/oder die Anlage (200) des Anrufers und/oder die Anlage (300) des angerufenen Teilnehmers zu einer PBX-Telefonanlage gehört.

13. System, das so konfiguriert ist, dass es eine rufteilnehmergesteuerte Vermeidung der Umleitung der Voicemail (500) gemäß einem Verfahren nach einem der Ansprüche 1 bis 12 durchführt, umfassend:
- einen Speicher zum Speichern eines Zeitmesswertes (t, td, ts);
- Mittel zum Einleiten, Trennen und/oder Beenden eines Anrufs (110, 120);
- Mittel zum Empfangen der Information, dass der Anruf (110, 120) das System (300) des angerufenen Teilnehmers erreicht hat und klingelt;
- Mittel zum Einleiten und/oder Aktivieren oder Deaktivieren eines Zeitmessers (400) und/oder einer Markierung (710, 720, 730);
- Mittel zur Berechnung und/oder Modulation des Zeitmessers (400) und/oder der Markierung (710, 720, 730); und
- Mittel zum Anzeigen und/oder Bearbeiten des Zeitmessers (400) und/oder der Markierung (710, 720, 730).

14. System nach Anspruch 13, wobei ein solches System Teil eines PBX-Telefonsystems ist.

15. System nach Anspruch 13 oder 14, wobei das System (200) des Anrufers und/oder das System (300) des angerufenen Teilnehmers eine beliebige Art von Telefoniegerät oder ein anderes Kommunikationssystem ist, wobei ein Gerät (200) des Anrufers mit einer Voicemail (500) eines Systems (300) des angerufenen Teilnehmers verbunden werden kann.

## Revendications

1. Procédé d'évitement de la redirection de messagerie vocale (500) contrôlé par un appelant, comprenant les étapes suivantes:
a) lancement d'un premier appel (110) depuis le système (200) de l'appelant vers le système (300) de l'appelé;
b) lancement (410) d'une minuterie (400) pour calculer une valeur de temps (t) une fois que le premier appel (110) a atteint le système de l'appelé (300) et qu'il sonne;
c) arrêt (420) de la minuterie (400) une fois qu'une connexion avec une messagerie vocale (500) du système de l'appelé (300) est établie;
d) stockage (430) de la valeur de temps (t) dans le système de l'appelant (200), résultant en une valeur de temps stockée (ts);
e) lancement d'un deuxième appel (120) depuis le système de l'appelant (200) vers le système de l'appelé (300);
f) activation (440) de la valeur de temps stockée (ts) une fois que le deuxième appel (120) a atteint le système de l'appelé (300) jusqu'à ce que la valeur de temps stockée (ts) expire (450); et
g) déconnexion du deuxième appel (120) pour éviter la redirection vers la messagerie vocale (500) du système de l'appelé (300).

2. Procédé selon l'une des revendications précédentes, dans lequel à l'étape d) la valeur de temps (t) est diminuée d'une valeur prédéterminée (td), résultant en la valeur de temps stockée (ts).

3. Procédé selon l'une des revendications précédentes, dans lequel à l'étape d) une étape de commande facultative pour le système de l'appelant (200) est prévue afin de stocker la valeur de temps (t) à l'étape c).

4. Procédé selon l'une des revendications précédentes, dans lequel à l'étape d) un premier indicateur (710) est utilisé, lequel est un indicateur de temps de stockage.

5. Procédé selon l'une des revendications précédentes, dans lequel avant l'étape e) la minuterie (400) est activée ou désactivée.

6. Procédé selon l'une des revendications précédentes, dans lequel à l'étape f) un deuxième indicateur (720) est utilisé, lequel est un indicateur d'activation de la minuterie de la messagerie vocale.

7. Procédé selon l'une des revendications précédentes, dans lequel une valeur de temps (t, td, ts) est stockée avec les informations relatives à l'appelé.

8. Procédé selon la revendication 1, dans lequel l'étape a) comprend l'envoi d'un message SETUP (610) du système de l'appelant (200) au système de l'appelé (300).

9. Procédé selon la revendication 8, dans lequel un élément d'information (800) est inclus dans le message de configuration (610), lequel peut être utilisé pour éviter la redirection vers la messagerie vocale (500).

10. Procédé selon la revendication 9, dans lequel l'élément d'information (800) comprend deux ensembles de données :
1) données: 0 pas de connexion à la messagerie vocale (500) ;
2) données: 1 connexion à la messagerie vocale (500) possible.

11. Procédé selon l'une des revendications 8 à 10, dans lequel un troisième indicateur (730) est activé avant qu'un appel ne soit lancé à l'étape a) pour activer ou désactiver l'élément d'information (800).

12. Procédé selon l'une des revendications précédentes, dans lequel le système de l'appelant (200) ou le système de l'appelé (300) est un système téléphonique PBX et/ou le système de l'appelant (200) et/ou le système de l'appelé (300) appartient à un système téléphonique PBX.

13. Système configuré pour effectuer un évitement contrôlé par l'appelant de la redirection de la messagerie vocale (500) selon un procédé selon l'une des revendications 1 à 12, comprenant:
- une mémoire pour stocker une valeur de temps (t, td, ts);
- des moyens pour initier, déconnecter et/ou terminer un appel (110, 120);
- des moyens pour recevoir l'information que l'appel (110, 120) a atteint le système de l'appelé (300) et qu'il sonne;
- des moyens de déclenchement et/ou d'activation ou de désactivation d'une minuterie (400) et/ou d'un indicateur (710, 720, 730);
- des moyens de calcul et/ou de modulation de la minuterie (400) et/ou de l'indicateur (710, 720, 730); et
- des moyens d'affichage et/ou d'édition de la minuterie (400) et/ou de l'indicateur (710, 720, 730).

14. Système de la revendication 13, dans lequel un tel système fait partie d'un système téléphonique PBX.

15. Système de la revendication 13 ou 14, dans lequel le système de l'appelant (200) et/ou le système de l'appelé (300) est tout type de dispositif téléphonique ou tout autre système de communication, dans lequel un dispositif de l'appelant (200) peut être connecté à une messagerie vocale (500) du système de l'appelé (300).
